# EUROPÄISCHE PATENTSCHRIFT

(11) **EP 0 381 945 B1**
(45) Veröffentlichungstag und Bekanntmachung des Hinweises auf die Patenterteilung: **07.01.1993**
(21) Anmeldenummer: 90100680.9
(22) Anmeldetag: 13.01.1990
(51) Int. Cl.: F16F 1/38, B60G 21/055

(54) **Gummmi-Metall-Buchse, insbesondere für die Lagerung eines Stabilisatorstabes an einem Kraftfahrzeug**
Rubber-metal bushing, especially for mounting a stabilising rod in a motor vehicle
Manchon en caoutchouc et métal, en particulier pour le montage d'une barre stabilisatrice sur un véhicule automobile

(30) Priorität: 04.02.1989 DE 3903350
(43) Veröffentlichungstag der Anmeldung: 16.08.1990
(73) Patentinhaber: Jörn GmbH, D-70736 Fellbach (DE)
(72) Erfinder: Zawadzki, Bernd, Dipl.-Ing., D-7054 Korb (DE); Iliev, Albert, Dipl.-Ing., D-7000 Stuttgart 1 (DE)
(74) Vertreter: Neubauer, Hans-Jürgen, Dipl.-Phys.

(56) Entgegenhaltungen:
- EP-A- 0 020 790
- DE-C- 2 608 553
- DE-U- 7 327 342

## Beschreibung

Die Erfindung betrifft eine Gummi-Metall-Buchse, insbesondere für die Lagerung eines Stabilisatorstabes an einem Kraftfahrzeug nach dem Oberbegriff des Anspruchs 1.

Stabilisatorlager dienen als Gelenk und zur Lagerung des an beiden Seiten abgebogenen Stabilisator-Drehstabes an einem Fahrzeugrahmen. Sie nehmen die Verdrehungen des Stabilisatorstabes auf und müssen insbesondere bei geländegängigen Fahrzeugen und Baufahrzeugen extrem hohe Radialkräfte ohne Zerstörung ertragen.

Es sind Stabilisatorlagerungen mittels Gleitbuchsen bekannt, bei denen der Stabilisatorstab in einer geschmierten Kunststoffbuchse drehbar gelagert ist. Solche Lagerungen sind nur brauchbar, solange die Dichtung am Rande der Aufnahmebohrung einwandfrei arbeitet.

Ferner sind Ausführungen von Stabilisatorlagerungen bekannt, bei denen ungehaftete Gummibuchsen, die zur Montage einen längs durchgehenden Schlitz aufweisen, zwischen Stabilisatorstab und den äußeren Lagerschalen eingeklemmt werden. Diese Gummibuchsen können für leichte Personenkraftwagen ausreichend sein, halten aber großen Radialkräften, wie sie bei Lastkraftwagen oder ähnlichen auftreten, nicht Stand.

Die vorbeschriebenen Elastomer-Stabilisatorlagerungen sind hinsichtlich Dauerhaltbarkeit, Wartungsfreiheit und Fahrkomfort nicht befriedigend.

Eine weitere bekannte Ausführung einer Stabilisatorlagerung (DE-A- 2608 553) gemäß dem Oberbegriff des Anspruchs 1 enthält eine Gummi-Metall-Buchse mit äußeren, zusammenspannbaren Lagerhalbschalen, die ein Aufnahmeauge bilden. Im Aufnahmeauge sind zwei zusammenspannbare Gummi-Metall-Halbschalen angebracht, die aus je einer Gummi-Halbschale mit je einer ersten, innen festhaftend aufvulkanisierten, inneren Metall-Halbschale und je einer zweiten, außen festhaftend aufvulkanisierten äußeren, Metall-Halbschale bestehen. Die Gummi-Metall-Halbschalen liegen vor dem Zusammenspannen so aneinander, daß die äußeren Metall-Halbschalen konzentrisch zu den inneren Metall-Halbschalen liegen und zwischen den sich gegenüberliegenden Längsrändern der äußeren Metall-Halbschalen je ein Längsschlitz gebildet ist, der sich je als V-förmiger Längsspalt zwischen den Gummi-Halbschalen zu den inneren Metall-Halbschalen hin fortsetzt, die mit ihren Längsrändern mit geringem Abstand nahezu aneinander liegen. Beim Zusammenspannen der Lagerhalbschalen bzw. der Gummi-Metall-Halbschalen werden der Längsschlitz und der Längsspalt geschlossen. Weiter ist je eine dünne Gummischicht vorgesehen, die festhaftend auf den inneren Metall-Halbschalen aufvulkanisiert ist. Durch das Zusammenspannen wird in den Gummi-Halbschalen eine Radialspannung erzeugt, durch die die Gummi-Metall-Buchse bzw. die Gummi-Metall-Halbschalen sowohl im Aufnahmeauge als auch am Stabilisatorstab unverdrehbar fest gehalten werden, wobei die dünne Gummischicht an der Buchseninnenseite insbesondere zur Erhöhung des Reibwerts dient. Die Arbeitsaufnahme erfolgt molekular in den unter Vorspannung stehenden Gummi-Halbschalen, die sich beim Zusammenspannen zu einem durchgehenden, zylindrischen Ring angelegt haben. Damit wird eine hohe Dauerhaltbarkeit und Wartungsfreiheit erzielt.

Die Funktion dieser bekannten Stabilisatorlagerung ist somit gut, die Montage ist aber aus folgendem Grund aufwendig: Für die Montage ist es erforderlich, die beiden Gummi-Metall-Halbschalen mit den äußeren Lagerhalbschalen zusammenzuspannen. Da die Gummi-Metall-Halbschalen als zwei Einzelteile vorliegen, müssen diese von Hand an den Stabilisatorstab herangeführt und gehalten werden; beim Loslassen fällt wenigstens eine Gummi-Metall-Halbschale wieder ab. Das Halten der Gummi-Metall-Halbschalen am Stabilisatorstab und zugleich das Heranführen der äußeren Lagerhalbschalen für den Spannvorgang ist für einen Werker mit nur zwei zur Verfügung stehenden Händen offensichtlich schwierig, bzw. sind zwei Werker erforderlich, was für die Montage eines Stabilisatorlagers einen erheblichen Aufwand bedeutet.

Es ist bereits bekannt (EP-A- 0 020 790, Fig. 12), zwei Gummi-Metall-Halbschalen einer Buchse einseitig über einen Steg in der arbeitenden, dicken Gummischicht, dort wo die Gummi-Halbschalen aneinandergrenzen, zu verbinden. Damit wird erreicht, daß die Gummi-Metall-Halbschalen zusammenhängen und um diesen Verbindungssteg im Gummi einseitig aufgeklappt werden können, so daß sie auf beispielsweise einen Stabilisatorstab aufsteckbar wären, sich durch die Rückstellkraft des Gummis wieder schließen und dort vorläufig bis zum Heranführen der äußeren Lagerhalbschalen von selbst halten würden. Eine innere, dünne Gummischicht ist bei dieser bekannten Ausführung nicht vorgesehen.

Es hat sich gezeigt, daß bei der Anbringung eines solchen Gummistegs in der dickeren, arbeitenden Gummischicht der Gummi-Halbschalen die Gefahr besteht, daß es an den Gummiverbindungsstegen nach dem Verspannen zu Faltenbildungen und ungleichmäßigen Spannungsverläufen im Gummi kommen kann. Für diesen Fall treten dann nicht hinnehmbare Einschränkungen in der Dauerhaltbarkeit auf.

Die Aufgabe der Erfindung liegt darin, eine Gummi-Metall-Buchse, insbesondere für die Lagerung eines Stabilisatorstabes an einem Kraftfahrzeug so weiterzubilden, daß die Montage bei hoher Dauerhaltbarkeit vereinfacht wird.

Diese Aufgabe wird bei einer gattungsgemäßen Gummi-Metall-Buchse mit den kennzeichnenden Merkmalen des Anspruchs 1 gelöst.

Gemäß Anspruch 1 wird die dünne Gummischicht an zwei sich gegenüberliegenden Längsrändern der inneren Metall-Halbschale von einer Gummi-Metall-Halbschale zur andern durchgehend verlaufend ausgebildet. Dadurch hängen die beiden Gummi-Metall-Halbschalen einseitig zusammen, wobei an der durchgehenden dünnen Gummischicht ein Gummi-Filmscharnier geschaffen ist, an dem die beiden Gummi-Metall-Halbschalen aufklappbar sind.

Damit können die beiden Gummi-Metall-Halbschalen bei der Montage am Gummi-Filmscharnier aufgeklappt und über den Stabilisatorstab gesteckt werden, wonach die Gummi-Metall-Halbschalen wegen der einseitigen Gummiverbindung und auch durch die Rückstellkraft des Gummi-Filmscharniers auf dem Stabilisatorstab vorerst festliegen und halten. Der Werker hat somit wieder beide Hände frei, die äußeren Lagerhalbschalen heranzuführen und die Spannmittel für den Spannvorgang anzubringen. Dadurch wird die Montage vereinfacht und kann insbesondere bequem von einem Werker durchgeführt werden.

Zudem wird durch die Verwendung der inneren, dünnen Gummischicht als Gummi-Filmscharnier die Funktion der Gummi-Halbschalen nicht beeinflußt, die genauso wirken und sich beim Zusammenspannen genauso aneinanderlegen wie wenn zwei separate Halbschalen verwendet würden. Damit besteht auch nicht die Gefahr, daß sich an diesen Anlagen der Gummi-Halbschalen Falten bilden und der Spannungsverlauf so ungleichmäßig wird, daß Lebensdauereinschränkungen zu befürchten sind.

Zudem ist es vom geometrischen Aufbau und von der Anordnung des Gummi-Filmscharniers her günstig, wenn dieses möglichst nahe am Stabilisatorstab liegt, da dadurch zum Halten auf dem Stabilisatorstab relativ geringe Rückstellkräfte des Filmscharniers erforderlich sind und die beiden Gummi-Metall-Halbschalen nach dem Aufstecken auf den Stabilisatorstab nicht weit auseinanderklaffen.

Die innere, dünne Gummischicht, die das Filmscharnier bildet, kann im Bereich des Filmscharniers mit gleicher Schichtdicke von einem Längsrand der inneren Metall-Halbschale zum anderen geführt sein. Mit Anspruch 2 wird für eine andere Ausführungsform vorgeschlagen, daß sich die dünne Gummischicht zwischen den gegenüberliegenden Längsrändern der inneren Metall-Halbschalen radial erstreckt, d.h. dort um die Materialstärke der Metall-Halbschalen dicker ist. Dies kann sowohl aus fertigungstechnischen Gründen vorteilhaft sein, als auch ein, falls erforderlich, stärkeres Filmscharnier mit höherer Rückstellkraft ergeben.

Bei einer weiteren, vorteilhaften Ausführungsform nach Anspruch 3 sind die Längsränder der inneren Metall-Halbschalen im Bereich des Filmascharniers in Umfangsrichtung um einen bestimmten Betrag zurückversetzt. Somit ergibt sich dort gegenüber der Ausbildung an der anderen Seite ohne Filmscharnier ein breiterer Längsschlitz zwischen den inneren Metall-Halbschalenrändern. Dadurch ergibt sich bei entsprechender Dimensionierung ein Volumen zur besseren Aufnahme der freien, dünnen Gummischicht des Filmscharniers beim Zusammenspannen der Gummi-Metall-Halbschalen. Ohne dieses Volumen besteht die Gefahr, daß beim Zusammenspannen die freie, dünne Gummischicht nicht gleichmäßig verdrängt werden kann, so daß dort ein Gegendruck entsteht und die Vorspannung teilweise aufgehoben würde und damit die Halbschalen nicht mehr fest auf dem Stabilisatorstab aufliegen würden.

Gemäß einer Ausführungsform nach Anspruch 4 sind die äußeren und inneren Metall-Halbschalen im Querschnitt halbkreisförmig ausgebildet. Die Mittelpunkte dieser Halbkreise der im unverspannten Zustand gegenüberliegenden Halbschalen sind jedoch gegenüber einer Ebene durch die beiden Längsspalte nach oben bzw. unten versetzt. Bei einer solchen Ausführungsform kann die Verbindungsbreite des Gummi-Filmscharniers variiert werden, so daß darüber eine gewisse Dimensionierung, beispielsweise in der Rückstellkraft, durchführbar ist.

Nach Anspruch 5 sollen im Längsspalt, an der Seite, an der die durchgehende dünne Gummischicht das Gummi-Filmscharnier bildet, zwei gegenüberliegende Erhebungen angeformt sein. Diese Erhebungen, die vorteilhaft mit fließenden Übergängen in die Wände der Gummi-Halbschalen geformt sind und in einem mittleren axialen Bereich liegen sollen, legen sich beim Aufklappen der Gummi-Metall-Halbschalen aneinander. Dadurch wird nach einem bereits geringen Aufklappweg die Rückstellkraft des Gummi-Filmscharniers durch die aneinanderliegenden Erhebungen unterstützt. Aufgrund der getrennten Erhebungen kann die gesamte Gummi-Metall-Buchse bei der Herstellung einfach entformt werden und auch bei ungeschickter Hantierung beim Zusammenspannen besteht keine Gefahr, daß sich hierbei Falten bilden.

Mit den Merkmalen der Ansprüche 6 und 7 können durch den formschlüssigen Eingriff von Laschen in Taschen der das Aufnahmeauge bildenden, äußeren Lagerhalbschalen die zusammengespannten Gummi-Metall-Halbschalen sowohl bei der Montage als auch beim Betrieb innerhalb des Bereichs des Aufnahmeauges, insbesondere in axialer Richtung festgelegt und insbesondere gegen ein allmähliches, axiales Auswandern gesichert werden.

Anhand einer Zeichnung wird die Erfindung mit weiteren Einzelheiten, Merkmalen und Vorteilen näher erläutert.

Es zeigen
Fig. 1 eine stirnseitige Ansicht von Gummi-Metall-Halbschalen einer Gummi-Metall-Buchse (ohne Aufnahmeauge) im nicht zusammengespannten Zustand,
Fig. 2 einen Längsschnitt entlang der Linie A-A aus Fig. 1,
Fig. 3 eine vergrößerte Darstellung der Einzelheit X aus Fig. 1,
Fig. 4 eine vergrößerte Darstellung der Einzelheit Y aus Fig. 1,
Fig. 5 eine modifizierte Ausführung im Bereich der Einzelheit Y,
Fig. 6 und 7 eine weitere, modifizierte Ausführungsform im Bereich der Einzelheiten X und Y und
Fig. 8 und 9 eine weitere, modifizierte Ausführungsform im Bereich der Einzelheiten X und Y.

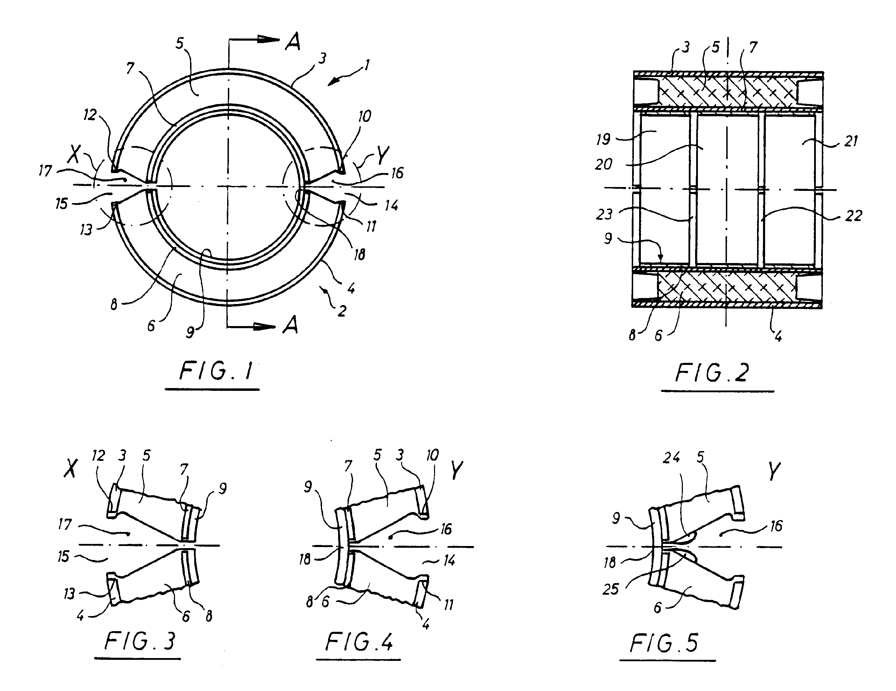

In Fig. 1 sind zwei Gummi-Metall-Halbschalen 1, 2 einer Gummi-Metall-Buchse dargestellt, die aus je einer äußeren Metall-Halbschale 3, 4, aus je einer Gummi-Halbschale 5, 6, aus je einer inneren Metall-Halbschale 7, 8 und einer inneren, dünnen Gummischicht 9 bestehen.

Die äußeren Metall-Halbschalen 3, 4 und inneren Metall-Halbschalen 7, 8 sind mit den Gummi-Halbschalen 5, 6 festhaftend verbunden.

Die Gummi-Metall-Halbschalen 1, 2 sind durch äußere (nicht dargestellte) Lagerhalbschalen, die ein Aufnahmeauge bilden, auf einen etwas kleineren Durchmesser zusammenspannbar. Vor dem Zusammenspannvorgang haben die Gummi-Metall-Halbschalen 1, 2 die in Fig. 1 dargestellte Lage, wobei die äußeren Metallhalbschalen 3, 4 konzentrisch zu den inneren Metall-Halbschalen 7, 8 liegen. Zwischen den sich gegenüberliegenden Längsrändern 10, 11 und 12, 13 der äußeren Metall-Halbschalen 3, 4 liegt jeweils ein Längsschlitz 14, 15, der sich als V-förmiger Längsspalt 16, 17 zwischen den Gummi-Halbschalen 5, 6 keilförmig in Richtung auf die inneren Metall-Halbschalen 7, 8 bzw. deren Längsränder hin fortsetzt. Die inneren Metall-Halbschalen 7, 8 liegen mit ihren Längsrändern mit nur einem geringen Abstand auseinander.

Die innere, dünne Gummischicht 9 ist am Längsspalt 17 entsprechend dem halbschaligen Aufbau geteilt, verläuft aber im Bereich des Längsspalts 16 von der inneren Metall-Halbschale 7 zur anderen inneren Metall-Halbschale 8. Dadurch hängen die Gummi-Metall-Halbschalen 1 und 2 über die Gummischicht 9 zusammen, wobei diese im Bereich der Längskerbe 16 ein Gummi-Filmscharnier 18 bildet, an dem die beiden Gummi-Metall-Halbschalen aufklappbar sind.

Der Bereich des Längsspalts 17 (Einzelheit X) und der Bereich des Längsspalts 16 (Einzelheit Y) sind in den Fig. 3 und 4 vergrößert dargestellt. Aus den Fig. 3 und 4 ist ersichtlich, daß der Gummi der Gummi-Halbschalen 5, 6 noch etwas über die Längsränder der inneren Metall-Halbschalen 7, 8 und äußeren Metall-Halbschalen 3, 4 verläuft. Weiter ist aus Fig. 4 zu erkennen, daß die Längsränder der inneren Metall-Halbschalen 7, 8 über die durchgehende Gummischicht 9 etwas auf Abstand gehalten werden.

In Fig. 2 ist ein Längsschnitt entlang der Linie A-A der Anordnung nach Fig. 1 gezeigt: Es sind wiederum die äußeren Metall-Halbschalen 3, 4, die Gummi-Halbschalen 5, 6, die inneren Metall-Halbschalen 7, 8 und die innere, dünne Gummischicht 9 zu erkennen. Diese Gummischicht 9 besteht aus drei umlaufenden, axial nebeneinanderliegenden Bahnen 19, 20, 21, die durch gummischichtfreie Rillen 22, 23 getrennt sind. Diese Anordnung als Gummischichtbahnen 19, 20, 21 ist im wesentlichen fertigungstechnisch bedingt.

Die axiale Länge der Metall-Halbschalen 3, 4 und 7, 8 ist (unverspannt) größer als die axiale Länge der Gummi-Halbschalen 5, 6.

Die dargestellte Anordnung hat folgende Funktion:
Die Gummi-Metall-Halbschalen 1, 2 werden bei der Montage am Gummi-Filmscharnier aufgeklappt, so daß eine breite Längsöffnung am Längsspalt 17 entsteht. Mit dieser Längsöffnung werden die Gummi-Metall-Halbschalen 1, 2 über einen Stabilisatorstab geschoben, der in seinem zylindrischen Durchmesser etwa dem inneren Durchmesser der Anordnung in Fig. 1 entspricht, d.h. dem Kreisdurchmesser, der von der inneren, dünnen Gummischicht 9 begrenzt wird. Über die Gummischicht 9 hängen die beiden Gummi-Metall-Halbschalen 1 und 2 zusammen, so daß sie bei geeigneter Drehung auf dem Stabilisatorstab aufgesetzt bleiben, ohne herabzufallen. Je nach der Rückstellkraft des Gummi-Filmscharniers 18 und dessen Auflage am Stabilisatorstab nehmen die Gummi-Metall-Halbschalen 1 und 2 nach dem Aufsetzen eine mehr oder weniger geschlossene Lage entsprechend der Fig. 1 ein. In jedem Fall hat der Monteur wieder beide Hände frei, um die (nicht dargestellten) Lagerhalbschalen auf die äußeren Metall-Halbschalen 3, 4 aufzusetzen und diese zusammenzuspannen, so daß ein Aufnahmeauge gebildet wird, das mit dem Fahrzeugaufbau verbunden ist. Der Durchmesser des Aufnahmeauges bzw. der Radius der Lagerhalbschalen ist etwas geringer als der Durchmesser bzw. Radius der unverspannten äußeren Metallhalbschalen 3, 4. Dadurch werden diese beim Zusammenspannen zusammengeführt, wobei die Längsspalte 16, 17 verkleinert werden und nach dem vollständigen Zusammenspannen die Gummi-Metall-Halbschalen 5, 6 und die äußeren Metall-Halbschalen mit ihren Längsrändern 10, 11 und 12, 13 aneinander liegen. Zugleich werden die Gummi-Halbschalen 5, 6 zylindrisch geschlossen und der Gummi wird auch in Axialrichtung auseinandergepreßt und seitlich ausgebeult.

Durch die damit hergestellte Spannung in den Gummi-Halbschalen 5, 6 werden die inneren Metall-Halbschalen 7, 8 und die dünne Gummischicht 9 fest und unverdrehbar auf den Stabilisatorstab aufgepreßt. Ebenso wird die Lage der äußeren Metall-Halbschalen 3, 4 im Aufnahmeauge unverdrehbar festgelegt.

In Fig. 5 ist eine modifizierte Ausführungsform dargestellt, bei der im Längsspalt 16 zwei gegenüberliegende Erhebungen an den Wänden der Gummi-Halbschalen 5, 6 angeformt sind. Die Erhebungen sind so gestaltet, daß sie sich beim Aufklappen der Gummi-Metall-Halbschalen 1, 2 um das Gummi-Filmscharnier 18 aneinander anlegen. Dadurch wird ersichtlich die Rückstellkraft des Gummi-Filmscharniers 18 vergrößert, so daß die Gummi-Metall-Halbschalen 1, 2 nach dem Aufsetzen auf den Stabilisatorstab wieder weitgehend ihre geschlossene Lage einnehmen. Diese Erhebungen 24, 25 werden zweckmäßig mit geringer axialer Länge in einem mittleren, axialen Bereich angebracht mit fließenden Übergängen in die Wände der Gummi-Halbschalen, so daß die Erhebungen 24, 25 beim Zusammenspannen des Längsspalts 16 in den Gummi gleichmäßig eingepreßt werden.

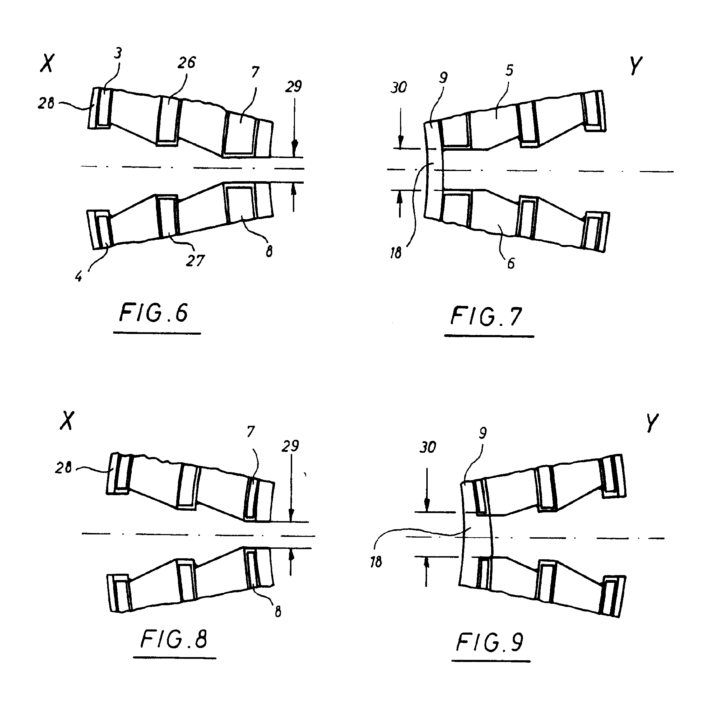

Die Fig. 6 und 7 zeigen vergrößerte Einzelheiten X und Y einer weiter modifizierten Ausführungsform. Es sind wieder äußere Metall-Halbschalen 3, 4 und relativ dicke, innere Metall-Halbschalen 7, 8 zu erkennen. In die Gummi-Halbschalen 5, 6 sind in an sich bekannter Weise zur Reduzierung einer Querdehnung des Gummis Zwischenbleche 26, 27 einvulkanisiert. Die Besonderheit dieser Ausführungsform besteht darin, daß auch die äußeren Metall-Halbschalen 3, 4 mit einer dünnen Gummischicht 28 überzogen sind, und daß die Abstände der Längsränder der inneren Metall-Halbschalen 7, 8 bei der Einzelheit X im Vergleich zur Einzelheit Y unterschiedlich gewählt sind.

Der mit Bezugszeichen 29 bezeichnete Abstand der Längsränder im aufklappbaren Bereich der Einzelheit X ist so ausgeführt, daß sich nach dem Zusammenspannen der Halbschalen die Metall- und Gummiteile ringförmig kontinuierlich aneinanderlegen. Der mit dem Bezugszeichen 30 bezeichnete Abstand der Längsränder der inneren Metall-Halbschalen 7, 8 im Bereich des Filmscharniers 18 der Einzelheit Y ist dagegen größer gewählt. Dadurch entsteht beim Zusammenspannen der Halbschalen ein Volumen zur besseren Aufnahme der freien, dünnen Gummischicht 9, die das Filmscharnier 18 bildet. Ansonsten kann dieser Gummischichtbereich beim Zusammenspannen nicht gleichmäßig verdrängt werden.

Die gleiche Maßnahme ist auch bei einer weiter modifizierten Ausführungsform nach den Fig. 8 und 9 getroffen, die ebenfalls die Einzelheiten X und Y darstellen. Der Unterschied dieser Ausführungsform zur vorhergehenden besteht vor allem darin, daß die inneren Metall-Halbschalen 7, 8 relativ dünn gewählt sind und daß sich die freie Gummischicht des Filmscharniers 18 auch zwischen die gegenüberliegenden Längsränder der inneren Metall-Halbschalen 7, 8 erstreckt, d.h. dort gegenüber der Schichtdicke der Gummiauflage 9 eine größere Dicke aufweist.

Die äußeren und inneren Metall-Halbschalen 3, 4 und 7, 8 sind bei den gezeigten Ausführungsformen im Querschnitt halbkreisförmig ausgebildet. Die Mittelpunkte der entsprechenden Halbkreise der im unverspannten Zustand gegenüberliegenden Halbschalen sind gegenüber einer Ebene durch beide Längsspalte 16, 17 nach oben bzw. unten versetzt. Dieser Versatz wird zweckmäßig in der Größenordnung des Randabstandes 29 gewählt.

## Patentansprüche

1. Gummi-Metall-Buchse, insbesondere für die Lagerung eines Stabilisatorstabes an einem Kraftfahrzeug,
mit äußeren, zusammenspannbaren Lagerhalbschalen, die ein Aufnahmeauge bilden,
mit zwei im Aufnahmeauge zusammenspannbaren Gummi-Metall-Halbschalen (1, 2) bestehend aus je einer Gummi-Halbschale (5, 6) mit je einer ersten, innen festhaftend aufvulkanisierten, inneren Metall-Halbschale (7, 8) und je einer zweiten, außen festhaftend aufvulkanisierten, äußeren Metall-Halbschale (3, 4),
wobei die Gummi-Metall-Halbschalen (1, 2) vor dem Zusammenspannen so aneinanderliegen, daß die äußeren Metall-Halbschalen (3, 4) konzentrisch zu den inneren Metall-Halbschalen (7, 8) liegen, zwischen den sich gegenüberliegenden Längsrändern (10, 11 und 12, 13) der äußeren Metall-Halbschalen (3, 4) je ein Längsschlitz (14, 15) gebildet ist, der sich je als Längsspalt (16, 17) zwischen den Gummi-Halbschalen (5, 6) zu den inneren Metall-Halbschalen (7, 8) hin sich verengend fortsetzt, die vor dem Zusammenspannen mit ihren Längsrändern mit weniger Abstand aneinander liegen als die äusßeren Metall- Halbschalen (3,4), und wobei beim Zusammenspannen der Lagerhalbschalen mit den Gummi-Metall-Halbschalen (1, 2) die Längsschlitze (14, 15) und die Längsspalte (16, 17) geschlossen sind und
mit einer dünnen Gummischicht (9), die festhaftend auf den inneren Metall-Halbschalen (7, 8) aufvulkanisiert ist,
**dadurch gekennzeichnet,**
daß die dünne Gummischicht (9) an zwei sich gegenüberliegenden Längsrändern der inneren Metall-Halbschalen (7, 8) von einer Gummi-Metall-Halbschale (1, 2) zur anderen durchgehend verläuft, so daß die beiden Gummi-Metall-Halbschalen (1, 2) einseitig zusammenhängen und an der durchgehenden dünnen Gummischicht (9) ein Gummi-Filmscharnier (18) gebildet ist, an dem die beiden Gummi-Metall-Halbschalen (1, 2) aufklappbar sind.

2. Gummi-Metall-Buchse nach Anspruch 1, dadurch gekennzeichnet, daß sich die dünne Gummischicht (9) am Gummi-Filmscharnier (18) zwischen den gegenüberliegenden Längsrändern der inneren Metall-Halbschalen (7, 8) radial erstreckt (Fig. 9).

3. Gummi-Metall-Buchse nach Anspruch 1 oder 2, dadurch gekennzeichnet, daß die Längsränder der inneren Metall-Halbschalen (7, 8) im Bereich des Filmscharniers (18) in Umfangsrichtung um einen bestimmten Betrag zurückversetzt sind, so daß dort gegenüber der Ausbildung an der anderen Seite ohne Filmscharnier (Abstand 29) ein breiterer Längsschlitz (Abstand 30) zwischen den inneren Metall-Halbschalenrändern gebildet ist, wodurch ein Volumen zur besseren Aufnahme der freien dünnen Gummischicht des Filmscharniers (18) beim Zusammenspannen der Halbschalen geschaffen ist.

4. Gummi-Metall-Buchse nach einem der Ansprüche 1 bis 3, dadurch gekennzeichnet, daß die äußeren und inneren Metall-Halbschalen (3, 4 und 7, 8) im Querschnitt halbkreisförmig ausgebildet sind, die Mittelpunkte der entsprechenden Halbkreise der im unverspannten Zustand gegenüberliegenden Halbschalen gegenüber einer Ebene durch beide Längsspalte (16, 17) nach oben bzw. unten versetzt sind und dieser Versatz (Abstand 29) durch die dünne Gummischicht (9) bzw. das Gummi-Filmscharnier (18) überbrückt ist.

5. Gummi-Metall-Buchse nach einem der Ansprüche 1 bis 4, dadurch gekennzeichnet, daß im Längsspalt (16) der Gummi-Halbschalen (5, 6) an der Seite der durchgehenen dünnen Gummischicht (9) wenigstens zwei gegenüberliegende Erhebungen (24, 25) angeformt sind, die sich beim Aufklappen der Gummi-Metall-Halbschalen (1, 2) aneinander anlegen und dabei die Rückstellkraft des Gummi-Filmscharniers (18) aus der dünnen Gummischicht (9) unterstützen und daß die Erhebungen (24, 25) in Axial- und Radialrichtung fließende Übergänge in die Wände der Gummi-Halbschalen (5, 6) aufweisen.

6. Gummi-Metall-Buchse nach einem der Ansprüche 1 bis 5, dadurch gekennzeichnet, daß die gegenüberliegenden Längsränder (10, 11 und/oder 12, 13) der äußeren Metall-Halbschalen (3, 4) wenigstens in einem Teilbereich in Radialrichtung als radial abstehende in axialer Richtung verlaufende Laschen aufgebogen sind und
daß an wenigstens einer der das Aufnahmeauge bildenden, äußeren Lagerhalbschalen eine taschenförmige Ausnehmung zur formschlüssigen Aufnahme und Festlegung der Laschen vorgesehen ist, so daß bei der Montage die radial abstehenden Laschen in die Taschen eingreifen und dadurch die Gummi-Metall-Halbschalen (1, 2) insgesamt über die formschlüssige Verbindung durch die Laschen und Taschen gegen ein Auswandern aus dem Aufnahmeauge gesichert sind.

7. Gummi-Metall-Buchse nach Anspruch 6, dadurch gekennzeichnet, daß die taschenförmige Ausnehmung durch aneinanderliegende, stufenförmige Aussparungen an Anlageflächen der Lagerhalbschalen gebildet ist und die Laschen an der Seite des Film-Scharniers (18) liegen.

## Claims

1. Rubber-metal bush, in particular for supporting a stabiliser bar on a motor vehicle; having outer support half-shells which can be clamped together and form an acceptance eye; having two rubber-metal half-shells (1, 2) which can be clamped together in the acceptance eye and each consist of a rubber half-shell (5, 6), each having a first inner metal half-shell (7, 8) which is vulcanised on on the inside and adheres firmly, and each having a second outer metal half-shell (3, 4) which is vulcanised on on the outside and adheres firmly, the rubber-metal half-shells (1, 2) being in contact with one another, before being clamped together, in such a way that the outer metal half-shells (3, 4) are located concentrically relative to the inner metal half-shells (7, 8) and a longitudinal slot (14, 15) being formed in each case between the respective opposite longitudinal edges (10, 11 and 12, 13) of the outer metal half-shells (3, 4), each of which longitudinal slots (14, 15) is continued as a longitudinal gap (16, 17) between the rubber half-shells (5, 6) and narrows towards the inner metal half-shells (7, 8), whose longitudinal edges have a smaller distance apart than that of the outer metal half-shells (3, 4) before the half-shells are clamped together, the longitudinal slots (14, 15) and the longitudinal gaps (16, 17) being closed when the support half-shells are clamped together with the rubber-metal half-shells (1, 2); and having a thin rubber layer (9) which is vulcanised onto the inner metal half-shells (7, 8) so that it adheres firmly; characterised in that the thin rubber layer (9) extends continuously on two mutually opposite longitudinal edges of the inner metal half-shells (7, 8) from one rubber-metal half-shell (1, 2) to the other so that the two rubber-metal half-shells (1, 2) are connected on one side and a rubber film hinge (18), at which the two rubber-metal half-shells (1, 2) can be opened, is formed on the continuous thin rubber layer (9).

2. Rubber-metal bush according to Claim 1, characterised in that the thin rubber layer (9) on the rubber film hinge (18) extends radially between the opposite longitudinal edges of the inner metal half-shells (7, 8) (Fig. 9).

3. Rubber-metal bush according to Claim 1 or 2, characterised in that the longitudinal edges of the inner metal half-shells (7, 8) are set back in the peripheral direction by a certain amount in the region of the film hinge (18) so that a longitudinal slot (distance 30) wider than that configured at the other side without film hinge (distance 29) is formed there between the inner metal half-shell edges, by which means a volume is created which can accommodate the free thin rubber layer of the film hinge (18) better when the half-shells are clamped together.

4. Rubber-metal bush according to one of Claims 1 to 3, characterised in that the outer and inner metal half-shells (3, 4 and 7, 8) are designed with semicircular cross-section, the centres of the corresponding semicircles of the half-shells which are opposite in the unclamped condition are offset upwards and downwards respectively relative to a plane through both longitudinal gaps (16, 17) and this offset (distance 29) is bridged over by the thin rubber layer (9) or the rubber film hinge (18) respectively.

5. Rubber-metal bush according to one of Claims 1 to 4, characterised in that at least two opposite protuberances (24, 25) are formed in the longitudinal gap (16) of the rubber half-shells (5, 6) on the side of the continuous thin rubber layer (9), which protuberances (24, 25) come into contact with one another when the rubber-metal half-shells (1, 2) are opened and, in the process, support the return force of the rubber film hinge (18) comprising the thin rubber layer (9);and that the protuberances (24, 25) have flowing transitions into the walls of the rubber half-shells (5, 6) in the axial and radial directions.

6. Rubber-metal bush according to one of Claims 1 to 5, characterised in that the opposite longitudinal edges (10, 11 and/or 12, 13) of the outer metal half-shells (3, 4) are bent up in the radial direction at least in a partial region as radially protruding tabs extending in the axial direction;and in that a pocket-shaped recess for the positive acceptance and fixing of the tabs is provided on at least one of the outer support half-shells forming the acceptance eye, so that during assembly the radially protruding tabs engage in the pockets and, by this means, the rubber-metal half-shells (1, 2) are secured in total against movement out of the acceptance eye by means of the positive connection by the tabs and pockets.

7. Rubber-metal bush according to Claim 6, characterised in that the pocket-shaped recess is formed by adjacent, step-shaped reliefs on contact surfaces of the support half-shells and the tabs are located on the side of the film hinge (18).

## Revendications

1. Manchon en caoutchouc et métal, en particulier pour le montage d'une barre stabilisatrice sur un véhicule automobile,
avec des demi-coquilles de palier extérieures, qui peuvent être assemblées avec serrage et constituent un oeillet récepteur,
avec deux demi-coquilles en caoutchouc et métal (1, 2), qui peuvent être assemblées par serrage dans l'oeillet récepteur et sont chacune constituées d'une demi-coquille en caoutchouc (5, 6), d'une première demi-coquille en métal intérieure (7, 8), fixée par vulcanisation à l'intérieur, et d'une seconde demi-coquille en métal extérieure (3, 4), fixée par vulcanisation à l'extérieur,
les demi-coquilles en caoutchouc et métal (1, 2) étant, avant l'assemblage par serrage, juxtaposées de telle sorte que les demi-coquilles en métal extérieures (3, 4) sont concentriques aux demi-coquilles en métal intérieures (7, 8), une fente longitudinale respective (14, 15) étant formée entre les bords longitudinaux en vis-à-vis (10, 11 et 12, 13) des demi-coquilles en métal extérieures (3, 4), chaque fente se prolongeant en se rétrécissant sous la forme d'un interstice longitudinal (16, 17) entre les demi-coquilles en caoutchouc (5, 6), jusqu'aux demi-coquilles en métal intérieures (7, 8) dont les bords longitudinaux sont, avant l'assemblage par serrage, juxtaposés avec un écartement inférieur à celui des bords longitudinaux des demi-coquilles en métal extérieures (3, 4), et les fentes longitudinales (14, 15) et les interstices longitudinaux (16, 17) étant fermés lors de l'assemblage par serrage des demi-coquilles de palier avec les demi-coquilles en caoutchouc et métal (1, 2),
et avec une mince couche de caoutchouc (9), qui est fixée par vulcanisation sur les demi-coquilles en métal intérieures (7, 8),
**caractérisé** en ce que la mince couche de caoutchouc (9) s'étend en continu sur deux bords longitudinaux en vis-à-vis des demi-coquilles en métal intérieures (7, 8), d'une demi-coquille en caoutchouc et métal (1, 2) à l'autre, de sorte que les deux demi-coquilles en caoutchouc et métal (1, 2) sont attachées d'un côté et que la mince couche de caoutchouc continue (9) constitue une charnière pelliculaire en caoutchouc (18), permettant d'ouvrir les deux demi-coquilles en caoutchouc et métal (1, 2).

2. Manchon en caoutchouc et métal selon la revendication 1, **caractérisé** en ce que la mince couche de caoutchouc (9), dans la région de la charnière pelliculaire en caoutchouc (18), s'étend radialement entre les bords longitudinaux en vis-à-vis des demi-coquilles en métal intérieures (7, 8) (figure 9).

3. Manchon en caoutchouc et métal selon la revendication 1 ou 2, **caractérisé** en ce que les bords longitudinaux des demi-coquilles en métal intérieures (7, 8) sont, dans la région de la charnière pelliculaire (18), en retrait d'une valeur donnée en direction circonférentielle, de sorte qu'est formée en cet endroit, par rapport à la configuration sur l'autre côté dépourvu de charnière pelliculaire (distance 29), une fente longitudinale plus large (distance 30) entre les bords des demi-coquilles en métal intérieures, créant ainsi un volume pour mieux recevoir la mince couche de caoutchouc libre de la charnière pelliculaire (18) lors de l'assemblage par serrage des demi-coquilles.

4. Manchon en caoutchouc et métal selon l'une des revendications 1 à 3, **caractérisé** en ce que les demi-coquilles en métal extérieures et intérieures (3, 4 et 7, 8) ont une section semi-circulaire, les centres des demi-cercles correspondants des demi-coquilles en vis-à-vis à l'état non serré étant décalés respectivement vers le haut ou vers le bas par rapport à un plan passant par les deux interstices longitudinaux (16, 17) et ce décalage (distance 29) étant couvert par la mince couche de caoutchouc (9) ou encore la charnière pelliculaire en caoutchouc (18).

5. Manchon en caoutchouc et métal selon l'une des revendications 1 à 4, **caractérisé** en ce qu'au moins deux bossages en vis-à-vis (24, 25) sont formés dans l'interstice longitudinal (16) des demi-coquilles en caoutchouc (5, 6), du côté de la mince couche continue de caoutchouc (9), bossages qui s'appliquent l'un contre l'autre lors de l'ouverture des demi-coquilles en caoutchouc et métal (1, 2) et assistent alors la force de rappel de la charnière pelliculaire en caoutchouc (18) constituée par la mince couche de caoutchouc (9), et en ce que les bossages (24, 25) présentent des transitions fluides en direction axiale et radiale avec les parois des demi-coquilles en caoutchouc (5, 6).

6. Manchon en caoutchouc et métal selon l'une des revendications 1 à 5, **caractérisé** en ce que les bords longitudinaux en vis-à-vis (10, 11 et/ou 12, 13) des demi-coquilles en métal extérieures (3, 4) sont, au moins dans une région partielle, recourbés en direction radiale sous la forme de pattes partant radialement en saillie et s'étendant en direction axiale,
et en ce que, sur au moins une des demi-coquilles de palier extérieures constituant l'oeillet récepteur, un évidement en forme de poche est prévu afin de recevoir en liaison mécanique et de fixer en position les pattes, de sorte que, lors du montage, les pattes partant radialement en saillie s'engagent dans les poches et que les demi-coquilles en caoutchouc et métal (1, 2) sont ainsi globalement empêchées de sortir de l'oeillet récepteur, grâce à la liaison mécanique réalisée par les pattes et les poches.

7. Manchon en caoutchouc et métal selon la revendication 6, **caractérisé** en ce que l'évidement en forme de poche est formé par des évidements contigus en gradins pratiqués sur des faces d'application des demi-coquilles de palier, et les pattes se trouvent du côté de la charnière pelliculaire (18).
